# EUROPEAN PATENT SPECIFICATION

(11) **EP 1 768 751 B1**
(45) Date of publication and mention of the grant of the patent: **24.02.2010**
(21) Application number: 05856783.5
(22) Date of filing: 03.06.2005
(51) Int. Cl.: A62B 19/00, A62B 23/02, A62B 7/10, A62B 18/08, A62B 18/02

(54) **FILTER MEDIUM FOR BIOHAZARD MASK**
FILTERMEDIUM FÜR BIOGEFAHR MASKE
MÉDIUM FILTRANT POUR MASQUE BIOLOGIQUE

(30) Priority: 03.06.2004 US 861231
(43) Date of publication of application: 04.04.2007
(73) Proprietor: Freriks, David R., Hinkley, Illinois 60520 (US)
(72) Inventor: Freriks, David R., Hinkley, Illinois 60520 (US)
(74) Representative: Casey, Lindsay Joseph
(86) International application number: PCT/US2005/019561
(87) International publication number: WO 2006/083287

(56) References cited:
- EP-A- 0 159 697
- DE-U1- 8 815 460
- US-A- 5 024 594
- US-A- 6 117 515
- US-B2- 6 584 976

## Description

### Field of the Invention

This invention relates to filter media for masks which protect against biological hazards.

### Background of the Invention

Recent developments in antimicrobial respirators have taken the approach of filtering exhaled breath as well as inhaled breath (U.S. Patent No. 6,584,976 B2 and US-A-7 152 600). By filtering exhalation, the wearer is prevented from exhaling both biologic entities such as bacteria and viruses into the environment where they can contaminate their surroundings and infect other people. Also, they are prevented from exhaling particles which would disturb or contaminate environments that are intended to be particularly clean such as pharmaceutical or nanotechnology production facilities.

Unfortunately, there would be problems to overcome with this approach to filtering. In particular, the filtering of exhalation would likely result in moisture build up in the filter media making the pressure drop (resistance) to exhalation extremely high and making respiration difficult. This would result in frequent changes of respirators or filters and exposing wearer's and others to unwanted contamination. This is particularly true if the filter media is comprised of typical HEPA filtering material comprised of non-woven fibers. These media would become saturated with water vapor from the wearers' exhalation and would have to be changed on a frequent basis.

It is desirable therefore to have an exhalation filter unit for respirators or masks which could maintain low pressure drop, (i.e., low exhalation resistance) and superior moisture vapor transmission rate while trapping bacteria and viruses in the interior of the filter.

Modern membrane technologies have resulted in HEPA level filtration characteristics with very low resistance, but none has been designed specifically for the filtering of human exhalation or use in respirators which accomplish this purpose. Developments in membrane technology by Gore and others (e.g., U.S. Patent No. 4,187,390) have shown that extremely high rates of moisture vapor transmission can be achieved using modem membrane manufacturing technologies. However, this moisture vapor transmission (MVT) capability has not been integrated with HEPA (High Efficiency Particulate filtration) level filtration related to antimicrobial filtration, particularly with regard to the filtering of human exhalation until the present invention.

Processes for making porous PTFE membranes having customized and uniform pore size are known (e.g., U.S. Patent No. 5,910,277) as are inhalation filter units employing PTFE membranes (e.g., U.S. Patent No. 6,309,438). Missing in the art is the use of PTFE membranes which meet the specialized requirements for exhalation filters, namely, HEPA level filtration of bacterial and viral matter, coupled with low pressure drop and high MVT.

The filter material itself is not the only feature of a filter unit requiring special design consideration for exhalation. The physical structure of an exhalation filter also requires attention. In a biohazard mask suitable for civilian use (or any other mask requiring filtering), the filter unit structure should be easily replaceable, with minimum discomfort to the user during replacement but maximum safety during quarantine conditions.

### Summary: of the invention

According to an aspect of the present invention, there is provided an exhalation filter medium as specified in Claim 1.

The present invention accommodates the above-mentioned goals through a number of design features, appearing as recited in various instances and combinations in the appended claims. Generally, the present invention relates to a filter wherein the moisture vapor transmission efficiency has been improved by using a porous PTFE film with a specific pore diameter. The moisture vapor transmission can also be improved by the use of coatings or layers that enhance either or both of the wicking and evaporative qualities of the PTFE material, or the anti-biologic and anti-viral properties of the fitter (e.g., using blocidal materials).

### Detailed Description of the Preferred Embodiments

A first example for understanding the present invention IS apolytetrafluoroethylene porous film between two layers of nonwoven polyolefin spun bond which is impregnated with antimicrobial chemicals on the interior side of the filtering element. The purpose of the antimicrobial additives is to provide a lethal environment for biologics trapped in the media. Hence, this example involves three layers. The middle layer is PTFE. This is sandwiched by layers of spun bond, known in the art to give rigidity to the PTFE membrane. On the layer intended to be on the face side of the mask (for exhalate) or the ambient side of the mask (for inhalate), an antimicrobial chemical is added in sufficient elective doses, for example, an agent like REPUTEX which works within the spunbond material to control the growth of microbes. In this example and all of the others herein, the PTFE pore size is preferable 0.1 to 0.4 µ (microns), and most preferably 0.2 µ (microns), in order to allow maximum transmission of water vapor, with minimum chance for passage of bacterial or viral matter.

A second example for understanding the present invention involves the same three layer structure as example 1, but instead of antimicrobial coatings, there is added a wicking material to the spun bond on the ambient side of the exhalation filter. Such wicking materials may include the DP-988 Synthetic-Fiber Hydrophilic Finishing Agent, manufactured by Zhangjiagang Duplus Chemical Co., or similar chemicals manufactured by Daiwa Corporation, Japan. These chemicals have the effect of improving the transmissivity of water vapor away from the filter unit.

An embodiment of the present invention involves combining examples 1 and 2 into a single exhalation filter, in which one side of the membrane has spun bond impregnated with a wicking material, and the other side of the membrane has spun bond impregnated with an antimicrobial material.

A preferred embodiment involves a four-or-five layer filter medium. In this embodiment, one or more of the spun bond layers sandwiching the PTFE membrane may be inert/uncoated. The various wicking and antimicrobial functions would be accomplished by adding an entirely new layer, as desired. For example, there may be a five layer filter medium for an exhalation filter with the top layer (exposed to the ambient) containing the wicking material, the layer below that spun bond, the layer below that a PTFE membrane, the layer below that another spun bond layer, and finally the bottom layer (exposed to the wearer's exhalate) containing the antimicrobial material. These additional layers may themselves be a base of spun bond, or may be any other material suitable for holding the applicable chemicals while exhibiting low pressure drop to easily pass breath.

All of the foregoing embodiments may be included in a filter cartridge structure designed for easy replaceability. Preferably, the filter cartridge is in the shape of a horseshoe, and has an internal volume (about 25.4 mm Y50.8 mm thick (about 1 Y2 inches thick)) containing the appropriate filter medium. The exterior surface of the cartridge includes a grill. The cartridges sit on the surface of the mask, just under the nose portion. One is for inhalation, and is removably seated on the mask. One is for exhalation, and is removably seated on the mask. The seating is preferably a snap-fit, where buttons on the mask will permit pop-out removal of each respective filter cartridge. Other mechanical actuators are also contemplated, e.g., catch releases, slides, etc.

Pop-out ejection of filter cartridges, coupled with snap-fit insertions, permit quick changes. This can be important during quarantine conditions, both for comfort and for the safety of self and others.

It will be appreciated that those skilled in the art may now make many uses and modifications of the specific embodiments described without departing from the inventive concepts. The recitation of the features and characteristics of the embodiments shown above is not meant to be limiting, but rather exemplary, with the appended claims and their equivalents defining the patentee's property rights hereunder.

## Claims

1. An exhalation filter medium comprising a porous PTFE film sandwiched between a first layer of a nonwoven polyolefin spun bond and a second layer of a nonwoven polyolefin spun bond where the fust spun bond layer is impregnated with a wicking material and the second spun bond layer is impregnated with an antimicrobial material.

2. An exhalation filter medium as claimed in claim 1 wherein the pore diameter of the PTFE film is between 0.1µ and 0.4µ.

3. An exhalation filter medium as claimed in claim 2 wherein the pore diameter is 0.2µ

4. An exhalation filter medium as claimed in any of claim 1-3 wherein in addition to the PTFE layer, the first spun bond layer and the second spun bond layer, there is provided a third spun bond layer and a fourth spun bond layer; wherein the third spun bond layer is disposed between the first spun bond layer and the PTFE layer and the fourth layer is disposed between the PTFE layer and the second spun bond layer.

## Patentansprüche

1. Ausatemfiltermedium, umfassend eine poröse PTFE-Folie, die sandwichartig zwischen einer ersten Schicht aus einem nicht gewebten Polyolefin-Spinnvlies und einer zweiten Schicht aus einem nicht gewebten Polyolefin-Spinnvlies angeordnet ist, wobei die erste Spinnvliesschicht mit einem Material mit Dochtwirkung getränkt ist und die zweite Spinnvliesschicht mit einem antimikrobiellen Material getränkt ist.

2. Ausatemfiltermedium nach Anspruch 1, wobei der Porendurchmesser der PTFE-Folie zwischen 0,1 µ und 0,4 µ beträgt.

3. Ausatemfiltermedium nach Anspruch 2, wobei der Porendurchmesser 0,2 µ beträgt.

4. Ausatemfiltermedium nach einem der Ansprüche 1-3, wobei zusätzlich zur PTFE-Schicht, der ersten Spinnvliesschicht und der zweiten Spinnvliesschicht eine dritte Spinnvliesschicht und eine vierte Spinnvliesschicht vorgesehen sind; wobei die dritte Spinnvliesschicht zwischen der ersten Spinnvliesschicht und der PTFE-Schicht angeordnet ist und die vierte Schicht zwischen der PTFE-Schicht und der zweiten Spinnvliesschicht angeordnet ist.

## Revendications

1. Milieu de filtre d'exhalation comprenant un film PTFE poreux pris en sandwich entre une première couche d'une polyoléfine non tissée filée-liée et une deuxième couche d'une polyoléfine non tissée filée-liée, dans lequel la première couche filée-liée est imprégnée d'une matière de mèche et la deuxième couche filée-liée est imprégnée d'une matière antimicrobienne.

2. Milieu de filtre d'exhalation selon la revendication 1, dans lequel le diamètre des pores du film PTFE est compris entre 0,1µ et 0,4µ.

3. Milieu de filtre d'exhalation selon la revendication 2, dans lequel le diamètre des pores est de 0,2µ.

4. Milieu de filtre d'exhalation selon l'une quelconque des revendications 1 à 3, dans lequel en plus de la couche PTFE, de la première couche filée-liée et de la deuxième couche filée-liée sont fournies une troisième couche filée-liée et une quatrième couche filée-liée ; la troisième couche filée-liée étant disposée entre la première couche filée-liée et la couche PTFE et la quatrième couche étant disposée entre la couche PTFE et la deuxième couche filée-liée.
